# DEMANDE DE BREVET EUROPEEN

(11) **EP 1 601 146 A1**
(43) Date de publication de la demande: **30.11.2005**
(21) Numéro de dépôt: 04076586.9
(22) Date de dépôt: 28.05.2004
(51) Int. Cl.: H04L 12/58, H04L 29/12

(54) **Procédé et dispositif de transfert d'un courrier électronique à un destinataire identifié par un numéro de téléphone**

(71) Demandeur: FRANCE TELECOM, 75015 Paris (FR)
(72) Inventeur: Migault, Daniel, 92130 Issy les Moulineaux (FR)
(74) Mandataire: Maillet, Alain

(57) **Abrégé**

L'invention concerne un procédé de transfert d'un courrier électronique à un destinataire (120) identifié par un numéro de téléphone international, le courrier électronique étant émis par un émetteur (110) associé à un serveur de messagerie ENUM (100) ayant un identifiant prédéterminé, le serveur de messagerie ENUM (100) étant apte à traiter des informations conformément au protocole ENUM, le destinataire (120) étant associé à un serveur de messagerie ENUM (140), le courrier électronique étant transféré par l'intermédiaire de serveurs de messagerie (115, 125) et de serveurs de messagerie ENUM (100, 140), caractérisé en ce que lors du transfert du courrier électronique, le procédé comporte l'étape d'association, au numéro de téléphone international du destinataire (120) du courrier électronique, de l'identifiant du serveur de messagerie ENUM (100) auquel l'émetteur (110) du courrier électronique est associé.

## Description

La présente invention concerne un procédé et un dispositif de transfert d'un courrier électronique à un destinataire identifié par un numéro de téléphone.

L'invention concerne aussi un procédé et un dispositif de traitement d'un courrier électronique dont au moins un destinataire est identifié par un numéro de téléphone.

Plus précisément, la présente invention se situe dans le domaine de transfert de courrier électronique dont au moins un des destinataires est identifié par un numéro de téléphone international, le transfert du courrier électronique étant effectué à partir d'informations telles que décrites dans le protocole ENUM. Le protocole ENUM est décrit dans la RFC 2916 de l'IETF. IETF est l'acronyme de Internet Engineering Task Force.

ENUM est un protocole permettant de définir une architecture et un protocole basés sur le DNS (Domain Name Service) permettant de convertir les numéros de téléphone E.164 en noms de domaine Internet et de les associer à des services de communication à travers ce que l'on nomme des "Uniform Resource Identifiers" (URIs). Un URI est une séquence de caractères qui permet d'identifier des ressources telles qu'un document, une image, un fichier, une base de données, une adresse de courrier électronique ou d'autres ressources ou services présentant un format commun. Les formes d'URI les plus connues sont les "Uniform Resource Locators" (URLs), qui sont utilisés pour localiser des ressources en utilisant le World Wide Web.

Le protocole ENUM fait appel à des pointeurs de ressource ou "Naming Authority Pointer Resource Records" (NAPTR records) tels que définis dans RFC 3761, qui servent à identifier les méthodes ou les services disponibles permettant de contacter un point spécifique identifié grâce à un numéro E.164.

Le résultat d'une requête ENUM peut être un ou plusieurs URIs accompagnés de leur ordre de traitement et leur préférence, indiqués par des valeurs figurant dans les NAPTR records. Ces URIs sont alors utilisés pour référencer des ressources ou des services associés au numéro E.164 comme, par exemple, un numéro de fax, un numéro de téléphone mobile, une adresse de courrier électronique, des services de déviation d'appels, des services de messagerie unifiés ou un service de courrier vocal.

En d'autres termes, ENUM permet à quiconque de connaître, à l'aide d'un simple numéro de téléphone, les moyens de communication disponibles pour joindre un correspondant pour autant que ce dernier ait au préalable pris soin de publier ses coordonnées (Numéro de téléphone mobile, Numéro de fax, adresse de téléphonie IP, adresse de courrier électronique, adresse Internet, adresse de messagerie instantanée, etc...).

Actuellement, il n'est pas considéré de système de messagerie électronique utilisant certaines des caractéristiques du protocole ENUM qui soit compatible avec les systèmes de messagerie électronique existants.

Les enregistrements NAPTR permettent d'identifier les méthodes ou les services disponibles permettant de contacter un point spécifique identifié grâce à un numéro E.164 et il est possible de définir des priorités parmi ces services. Ces priorités ne sont qu'informatives et un client ayant défini de telles priorités n'a pas la garantie que ces priorités seront respectées.

De plus, les enregistrements NAPTR ne permettant pas d'introduire des priorités conditionnelles, il n'est pas possible de faire évoluer les priorités de manière automatique en fonction de circonstances telles que la date, le jour ou l'heure.

L'invention a pour but de résoudre les inconvénients de l'art antérieur en proposant un procédé et un dispositif de transfert d'un courrier électronique à un destinataire identifié par un numéro de téléphone qui soient compatibles avec des systèmes de messagerie électronique classiques. L'invention propose aussi un procédé et un dispositif de traitement d'un courrier électronique dont au moins un destinataire est identifié par un numéro de téléphone de manière à éviter que l'émetteur du courrier électronique à un destinataire identifié par son numéro de téléphone international n'ait à connaître l'identifiant du serveur de messagerie auquel est associé le destinataire.

A cette fin, selon un premier aspect, l'invention propose un procédé de transfert d'un courrier électronique à un destinataire identifié par un numéro de téléphone international, le courrier électronique étant émis par un émetteur associé à un serveur de messagerie ENUM ayant un identifiant prédéterminé, le serveur de messagerie ENUM étant apte à traiter des informations conformément au protocole ENUM, le destinataire étant associé à un serveur de messagerie ENUM, le courrier électronique étant transféré par l'intermédiaire de serveurs de messagerie électronique et de serveurs de messagerie ENUM, caractérisé en ce que lors du transfert du courrier électronique, le procédé comporte l'étape d'association, au numéro de téléphone international du destinataire du courrier électronique, de l'identifiant du serveur de messagerie ENUM auquel l'émetteur du courrier électronique est associé.

Corrélativement, l'invention concerne un dispositif de transfert d'un courrier électronique à un destinataire identifié par un numéro de téléphone international, le courrier électronique étant émis par un émetteur associé à un serveur de messagerie ENUM ayant un identifiant prédéterminé, le serveur de messagerie ENUM étant apte à traiter des informations conformément au protocole ENUM, le destinataire étant associé à un serveur de messagerie ENUM, le courrier électronique étant transféré par l'intermédiaire de serveurs de messagerie électronique et de serveurs de messagerie ENUM, caractérisé en ce que le dispositif de transfert du courrier électronique comporte des moyens d'association, au numéro de téléphone international du destinataire du courrier électronique, de l'identifiant du serveur de messagerie ENUM auquel l'émetteur du courrier électronique est associé.

Ainsi, il est possible de transmettre des courriers électroniques à travers des systèmes de messagerie électronique classiques. En associant au numéro de téléphone l'identifiant du serveur de messagerie ENUM auquel l'émetteur est associé, il est possible pour un serveur de messagerie classique disposant de cet identifiant, de transmettre le message vers un autre serveur adapté au protocole ENUM.

De plus, en associant à un numéro de téléphone international l'identifiant du serveur de messagerie ENUM auquel l'émetteur est associé, ledit émetteur n'a pas besoin de connaître l'identifiant du serveur de messagerie ENUM auquel le récepteur du courrier électronique est associé.

Selon un autre aspect de l'invention, l'association au numéro de téléphone international du destinataire du courrier électronique de l'identifiant du serveur de messagerie ENUM auquel l'émetteur du courrier électronique est associé est exécutée par un logiciel de messagerie électronique de l'émetteur du courrier électronique.

Ainsi, il n'est pas nécessaire de modifier les serveurs de messagerie classiques pour que l'invention puisse être implémentée.

L'invention concerne aussi un procédé de traitement, par un serveur de messagerie ENUM, d'un courrier électronique dont au moins un destinataire est identifié par un numéro de téléphone international, un serveur de messagerie ENUM étant apte à traiter des informations conformément au protocole ENUM, le courrier électronique ayant été émis par un émetteur associé au serveur de messagerie ENUM, caractérisé en ce que le procédé comporte les étapes de:
- obtention de l'identifiant du serveur de messagerie ENUM auquel le destinataire du courrier électronique est associé,
- transfert du courrier électronique au serveur de messagerie ENUM dont l'identifiant a été obtenu.

Corrélativement, l'invention concerne un serveur de messagerie ENUM apte à traiter un courrier électronique dont au moins un destinataire est identifié par un numéro de téléphone international, le serveur de messagerie ENUM étant apte à traiter des informations conformément au protocole ENUM, le courrier électronique ayant été émis par un émetteur associé au serveur de messagerie ENUM, caractérisé en ce que le serveur de messagerie ENUM comporte :
- des moyens d'obtention de l'identifiant du serveur de messagerie ENUM auquel le destinataire du courrier électronique est associé,
- des moyens de transfert du courrier électronique au serveur de messagerie ENUM dont l'identifiant a été obtenu.

Ainsi, le courrier électronique est transmis vers le serveur de messagerie ENUM le plus apte à traiter le courrier électronique, en l'occurrence le serveur de messagerie ENUM auquel le client destinataire est associé.

Selon un autre aspect de l'invention, l'identifiant du serveur de messagerie ENUM auquel le destinataire du courrier électronique est associé est obtenu en interrogeant un serveur de nom de domaine conforme au protocole ENUM et en obtenant le contenu d'un enregistrement prédéterminé du destinataire du courrier électronique.

Ainsi, le serveur de messagerie ENUM auquel l'émetteur du courrier électronique est associé n'a pas à mémoriser et connaître les identifiants de tous les serveurs de messagerie ENUM susceptibles d'être associés au destinataire du courrier électronique.

Selon un autre aspect de l'invention, le serveur de messagerie ENUM auquel le destinataire du courrier électronique est associé reçoit le courrier électronique destiné à un destinataire lui étant associé, obtient des consignes de transfert de courrier électronique associées au destinataire du courrier électronique et transfère le courrier électronique à destination du destinataire en fonction des consignes obtenues.

Ainsi, il est possible de définir des consignes pour le transfert d'un courrier électronique. Le récepteur d'un courrier électronique a la garantie que les courriers électroniques lui sont transmis conformément à ses exigences.

De plus, en assignant au serveur de messagerie ENUM auquel le destinataire du courrier électronique est associé la tâche d'appliquer les consignes de transfert, chaque serveur de messagerie ENUM n'a à connaître et à appliquer des consignes que pour les clients qui lui sont associé. Cette configuration simplifie ainsi l'implémentation des consignes de transfert.

L'invention concerne aussi le programme d'ordinateur stocké sur un support d'informations, ledit programme comportant des instructions permettant de mettre en oeuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente l'architecture du système de transfert de courrier électronique selon l'invention ;
la Fig. 2 représente une vue schématique de l'architecture du serveur de messagerie ENUM selon l'invention ;
la Fig. 3 représente une vue schématique de l'architecture du dispositif de communication d'un client selon l'invention ;
la Fig. 4 représente l'algorithme exécuté par le dispositif de communication d'un client transférant un courrier électronique selon l'invention ;
la Fig. 5 représente l'algorithme exécuté lors du transfert de courrier électronique selon l'invention ;
la Fig. 6a représente l'interface utilisateur du dispositif de communication d'un client lors de la composition d'un courrier électronique selon un premier mode de réalisation ;
la Fig. 6b représente l'interface utilisateur du dispositif de communication d'un client lors de la composition d'un courrier électronique selon un second mode de réalisation.

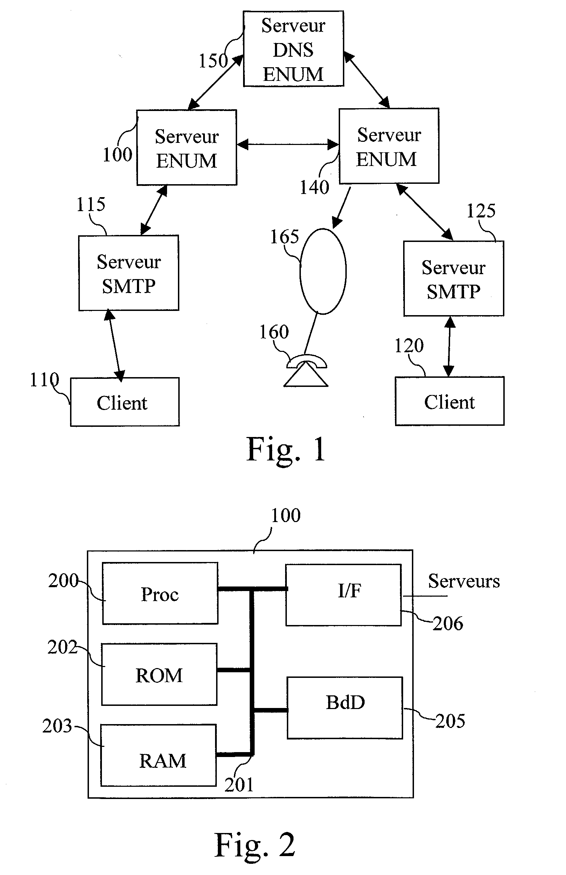

La **Fig. 1** représente l'architecture du système de transfert de courrier électronique selon l'invention.

Le système de transfert de courrier électronique permet à un client noté 110 en Fig. 1 d'envoyer un courrier électronique à un client noté 120 en utilisant le numéro de téléphone du client 120 et sans avoir à spécifier l'adresse du serveur de messagerie ENUM 140 du client 120.

Selon l'invention, un client 110, disposant d'un logiciel de messagerie électronique, compose un courrier électronique à destination du client 120. Le client 110 est associé à un serveur de messagerie électronique SMTP 115 et à un serveur de messagerie ENUM 100. Le client 120 est associé à un serveur de messagerie électronique SMTP 125 à et un autre serveur de messagerie ENUM 140. SMTP est l'acronyme de Simple Mail Transfer Protocol.

Le client 110 compose comme adresse de destination du courrier électronique, le numéro de téléphone international du client 120. Le courrier électronique est ensuite transféré au serveur de messagerie électronique SMTP 115 conformément au protocole SMTP. Les informations transférées au serveur de messagerie électronique SMTP 115 comprennent l'identifiant du client 110, le numéro de téléphone international du client 120 ainsi que le contenu du courrier électronique. Il est à remarquer ici que l'identifiant du client 110 n'est pas, contrairement à l'état de la technique, l'adresse électronique du client 110 mais le numéro de téléphone international du client 110 et l'adresse du serveur de messagerie ENUM 100 auquel le client 110 est associé. Il est aussi à remarquer ici que l'adresse du serveur de messagerie ENUM 100 auquel le client 110 est associé est aussi ajoutée au numéro de téléphone international du client 120.

Le serveur de messagerie électronique SMTP 115 est un serveur de courrier électronique permettant le transfert classique de courrier électronique. Il est aussi apte selon l'invention à traiter des courriers électroniques dans lesquels les adresses de l'émetteur et du destinataire ne sont pas des adresses de courrier électronique. Lorsque les adresses de l'émetteur et du destinataire sont des numéros de téléphone internationaux, le courrier électronique est transféré à un serveur de messagerie ENUM 100. Il est à remarquer ici que le serveur de messagerie électronique SMTP 115 ou serveur SMTP utilise l'adresse qui est associée au numéro de téléphone international du destinataire, en l'occurrence l'adresse du serveur de messagerie ENUM 100 auquel le client 110 est associé.

Le serveur de messagerie ENUM 100 est un serveur de messagerie apte à interroger une base de données dans laquelle sont publiées les différentes coordonnées des clients connus du protocole ENUM. Cette base de données est le serveur DNS ENUM 150 de la Fig. 1.

Le serveur de messagerie ENUM 100 est apte à générer des requêtes ENUM, à recevoir un ou plusieurs URIs accompagnés de leur ordre de traitement et leur préférence, indiqués par des valeurs figurant dans les NAPTR records.

Le serveur de messagerie ENUM 100 comporte, pour chaque client lui étant associé, les consignes de transfert de courriers électroniques. Ces consignes sont des informations représentatives de la manière dont les courriers électroniques destinés à un client doivent être transférés.

Le serveur de messagerie ENUM 100 est aussi apte à traiter des enregistrements prédéterminés qui sont transmis en retour des requêtes ENUM. Ces enregistrements prédéterminés sont par exemple l'enregistrement MX, l'enregistrement SRV ou l'enregistrement TXT du protocole DNS. Selon l'invention, ces enregistrements comprennent l'adresse du serveur de messagerie ENUM auquel le destinataire du courrier électronique est abonné. Un enregistrement MX, selon le protocole DNS, désigne classiquement un hôte appelé échangeur de messages, qui tantôt traite le courrier, tantôt le transfère pour un domaine. Un enregistrement TX est constitué d'une liste de chaînes de caractères. Cette liste comprend selon notre exemple l'adresse du serveur de messagerie électronique ENUM 140 auquel le client 120 est abonné.

Le serveur de messagerie ENUM 100, connaissant ainsi l'adresse du serveur de messagerie ENUM auquel le destinataire du courrier électronique est abonné, lui transfère le courrier électronique. Selon notre exemple, le serveur de messagerie ENUM 100 transfère le courrier électronique au serveur de messagerie ENUM 140.

Le serveur de messagerie ENUM 140 est identique au serveur de messagerie ENUM 100. Il ne sera pas plus décrit.

Le serveur de messagerie ENUM 140 à la réception d'un courrier électronique destiné à un de ses clients, lit les informations représentatives de la manière dont les courriers électroniques destinés au client doivent être transférés et transfère le courrier électronique selon ces informations. Les informations représentatives de la manière dont les courriers électroniques destinés à un client doivent être transférés seront décrites plus en détail en référence à la Fig. 2.

A titre d'exemple, le serveur de messagerie ENUM 140 transfère le courrier électronique au serveur SMTP 125 auquel le client 120 destinataire est associé ou transfère le courrier électronique par l'intermédiaire du réseau de télécommunication 165 au combiné téléphonique 160 de l'abonné 120.

La **Fig. 2** représente une vue schématique de l'architecture du serveur de messagerie ENUM selon l'invention.

Les serveurs de messagerie ENUM 100 et 140 étant identiques, seul le serveur de messagerie ENUM 100 sera décrit.

Le serveur de messagerie ENUM 100 est adapté à déterminer l'adresse du serveur de messagerie ENUM 140 auquel le client destinataire d'un courrier électronique est associé et à transférer ledit courrier électronique au serveur de messagerie ENUM 140 dont l'adresse a été déterminée. Plus précisément, le serveur de messagerie ENUM 100 détermine cette adresse à partir d'enregistrements prédéterminés du protocole DNS tels que l'enregistrement MX, l'enregistrement SRV ou l'enregistrement TXT.

Le serveur de messagerie ENUM 100 comporte un bus de communication 201 auquel sont reliés un processeur 200, une mémoire morte ROM 202, une mémoire vive RAM 203, une interface réseau 206 et une base de données 205.

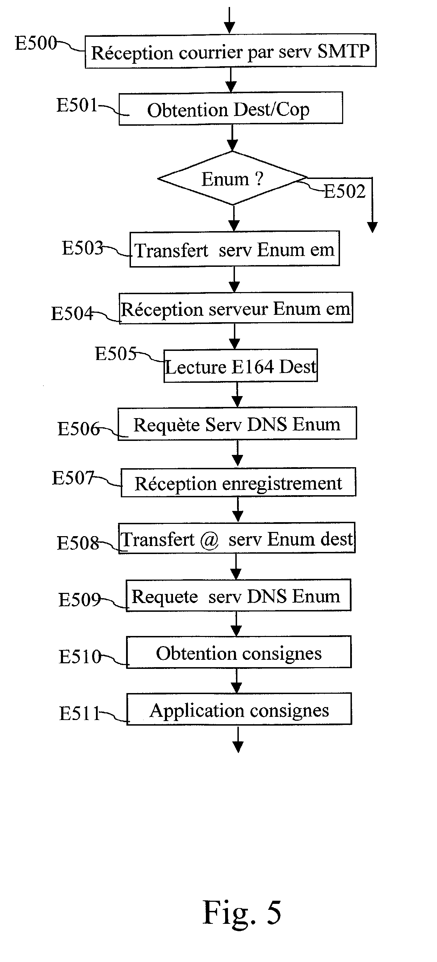

La mémoire morte ROM 202 mémorise entre autres une partie du programme mettant en oeuvre l'invention qui sera décrit ultérieurement en référence à la Fig. 5.

De manière plus générale, les programmes selon la présente invention sont mémorisés dans un moyen de stockage. Ce moyen de stockage est lisible par un microprocesseur 200. Ce moyen de stockage est intégré ou non au serveur de messagerie ENUM 100, et peut être amovible.

Lors de la mise sous tension du serveur de messagerie ENUM 100, le programme selon la présente invention est transféré dans la mémoire vive 203 qui contient alors le code exécutable de l'invention ainsi que les données nécessaires à la mise en oeuvre de l'invention.

L'interface réseau 206 permet au serveur de transférer et/ou de recevoir des données du serveur SMTP 115, du serveur de messagerie ENUM 140 et du serveur DNS ENUM 150.

La base de données 205 comporte, pour chaque client associé au serveur de messagerie ENUM 100, des informations représentatives de la manière dont les courriers électroniques destinés à un client doivent être transférés.

Ces consignes ou informations sont définies par les clients abonnés au serveur de messagerie ENUM 100, peuvent être conditionnelles à l'heure, au jour, à la date auquel le courrier électronique doit lui être transféré. Contrairement aux pointeurs de ressource NAPTR identifiant les méthodes ou les services disponibles permettant de contacter un client identifié grâce à un numéro E.164 ainsi que leur ordre de traitement et leur préférence, ces informations ont un caractère impératif et doivent donc être appliquées systématiquement par le serveur de messagerie ENUM 100. Contrairement aux pointeurs de ressource NAPTR, ces informations peuvent aussi être conditionnelles à l'heure, au jour et à la date auxquels le courrier électronique doit être transféré.

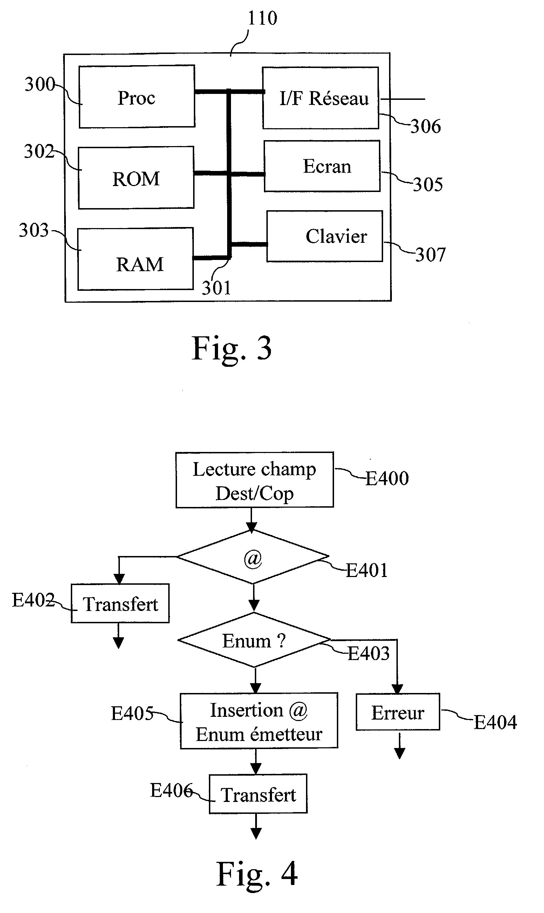

**La Fig. 3** représente une vue schématique de l'architecture du dispositif de communication d'un client transférant un courrier électronique selon l'invention.

Le dispositif de communication du client 110 est identique au dispositif de communication du client 120. Seul le dispositif de communication du client 110 sera donc décrit.

Le dispositif de communication du client 110 est adapté à déterminer si l'adresse du destinataire d'un courrier électronique devant être transféré est un numéro de téléphone international ou non et à ajouter audit numéro de téléphone l'adresse du serveur de messagerie ENUM 100 du client 110.

Le dispositif de communication du client 110 comporte un bus de communication 301 auquel sont reliés un processeur 300, une mémoire morte ROM 302, une mémoire vive RAM 303, une interface réseau 306 et une interface homme-chine composée par exemple d'un écran 305 et d'un clavier 307.

Le dispositif de communication du client 110 est par exemple un ordinateur, un assistant personnel, voire un téléphone mobile.

La mémoire morte ROM 302 mémorise entre autres le programme mettant en oeuvre l'invention qui sera décrit ultérieurement en référence à la Fig. 4.

De manière plus générale, les programmes selon la présente invention sont mémorisés dans un moyen de stockage. Ce moyen de stockage est lisible par un microprocesseur 300. Ce moyen de stockage est intégré ou non au dispositif de communication 100, et peut être amovible.

La **Fig. 4** représente l'algorithme exécuté par le dispositif de communication d'un client transférant un courrier électronique selon l'invention.

L'algorithme de la Fig. 4 est compris dans le logiciel de messagerie électronique du dispositif de communication d'un client 110. Lorsque le client 110 compose un courrier électronique, le processeur 300 du dispositif de communication du client 110 lit à l'étape E400 les champs de destination du courrier électronique.

A l'étape suivante E401, le processeur 300 détermine si la ou les adresses lues comportent toutes un caractère prédéterminé tel que le caractère "@". Dans l'affirmative, les adresses sont des adresses de courrier électronique classique. Le processeur 300 procède de manière classique à l'étape E402 au transfert du courrier électronique au serveur SMTP 115.

Dans la négative, le processeur 300 vérifie à l'étape E403 si les informations comprises dans les champs de destination sont des numéros de téléphone internationaux, c'est-à-dire s'ils sont conformes au format E.164. Dans la négative, un message d'erreur est transféré à l'étape E404 au client par l'intermédiaire de l'écran 305 du dispositif de communication 100.

Dans l'affirmative, le processeur 300 passe à l'étape suivante E405 et ajoute à chaque numéro de téléphone international, l'adresse du serveur de messagerie ENUM 100 auquel le client émetteur 110 est associé.

Si par exemple, le numéro international est le 33 1 23 45 67 90, l'adresse ainsi formée est : 33123456790@enum.com où enum100.com est le nom de domaine du serveur ENUM 100 auquel le client 110 est associé.

Cette opération effectuée, le processeur 300 transfère à l'étape E406 le courrier électronique ainsi modifié au serveur SMTP 115.

Dans une variante de réalisation, les étapes E400 à E405 du présent algorithme ne sont pas exécutées par le dispositif de communication 100 mais par le serveur SMTP 115 à la réception du courrier électronique.

La **Fig. 5** représente l'algorithme exécuté lors du transfert de courrier électronique selon l'invention.

Dans le système de transfert de courrier électronique selon la présente invention, un serveur SMTP, par exemple le serveur SMTP 115 reçoit à l'étape E500 un courrier électronique d'un client tel que client 110.

A la réception de ce courrier électronique, le serveur SMTP 115 obtient à l'étape E501 le ou les destinataires du courrier électronique. Le serveur SMTP 115 obtient le ou les destinataires conformément au protocole SMTP.

Cette opération effectuée, le serveur SMTP 115 vérifie à l'étape E502 si au moins un destinataire est identifié par son numéro de téléphone international. Dans la négative, le courrier électronique est un courrier électronique classique. Le serveur SMTP 115 transfère classiquement le courrier électronique.

Si au moins un destinataire est identifié par son numéro de téléphone international, le courrier électronique est transmis à l'étape E503 au serveur de messagerie ENUM dont l'adresse est ajoutée au numéro de téléphone international. Par exemple, le destinataire 120 est identifié par 33123456790@enum.com. Le courrier électronique est alors transféré au serveur de messagerie ENUM 100 dont le nom de domaine est @enum100.com.

Le courrier électronique est reçu à l'étape E504 par le serveur de messagerie ENUM 100.

A la réception du courrier électronique, le processeur 200 du serveur de messagerie ENUM 100 lit à l'étape E505 le numéro E 164 du destinataire du courrier électronique, en l'occurrence le client 120.

A partir de ce numéro, le serveur de messagerie ENUM 100 interroge à l'étape E506 le serveur DNS ENUM 150 pour obtenir le contenu d'un enregistrement prédéterminé associé au client 120. Cet enregistrement est l'enregistrement MX ou l'enregistrement SRV ou l'enregistrement TXT du protocole DNS. Selon l'invention, l'enregistrement comprend l'adresse du serveur de messagerie ENUM auquel le destinataire du courrier électronique est abonné.

A la réception à l'étape E507, des informations comprenant au moins l'enregistrement prédéterminé, le serveur de messagerie ENUM 100 lit à l'adresse du serveur de messagerie ENUM comprise dans l'enregistrement prédéterminé. Cette adresse est en l'occurrence l'adresse du serveur ENUM 140 auquel est associé le client 120.

Le serveur de messagerie 100 transfère ensuite à l'étape E508 le courrier électronique à l'adresse du serveur de messagerie ENUM précédemment obtenue. Selon notre exemple, le serveur de messagerie ENUM 100 transfère le courrier électronique au serveur de messagerie ENUM 140.

Il est à remarquer ici que selon l'invention, chaque client est associé à un serveur de messagerie ENUM. Ce serveur de messagerie ENUM dispose pour chaque client lui étant associé, des informations représentatives de la manière dont les courriers électroniques destinés à un client doivent être transférés. Selon l'invention, les informations représentatives de la manière dont les courriers électroniques destinés à un client doivent être transférés qui doivent être prises en compte sont les informations représentatives de la manière dont les courriers électroniques destinés au client destinataire doivent être transférés, et non celles définies pour le client ayant émis le message électronique.

Le serveur de messagerie ENUM 140 du client destinataire 120, à la réception du courrier électronique, génère à l'étape E509 une requête ENUM au serveur DNS ENUM afin d'obtenir le ou les URIs référençant les ressources ou les services associés au numéro du client destinataire du message électronique.

Le serveur de messagerie ENUM 140 lit à l'étape E510 dans sa base de données les consignes de transfert des courriers électroniques destinés au client destinataire du message électronique, en l'occurrence le client 120.

Le serveur de messagerie ENUM 140 applique ensuite les consignes de transfert précédemment lues et transfère le courrier électronique selon ces consignes.

Si le client 120 a donné comme consigne que la totalité des courriers électroniques doivent lui être transmis sous la forme de courriers électroniques à une adresse électronique prédéterminée pendant ses heures de travail, le courrier électronique est transféré au serveur SMTP de son lieu de travail dont l'adresse est référencée dans les ressources reçues à l'étape E509.

Si le client 120 a donné comme consigne que la totalité des courriers électroniques doivent lui être transmis sous la forme de courriers électroniques à une adresse électronique personnelle entre 18h00 et 6h00, le courrier électronique est transféré au serveur SMTP gérant son adresse personnelle et dont l'adresse est référencée dans les ressources reçues à l'étape E509.

Si le client 120 a donné comme consigne que les courriers électroniques doivent lui être transmis sous la forme de messages vocaux sur son combiné téléphonique 165, une synthèse vocale est effectuée pour le courrier électronique et le message vocal est ensuite transmis au combiné 160 par l'intermédiaire du réseau téléphonique 165 de la Fig. 1.

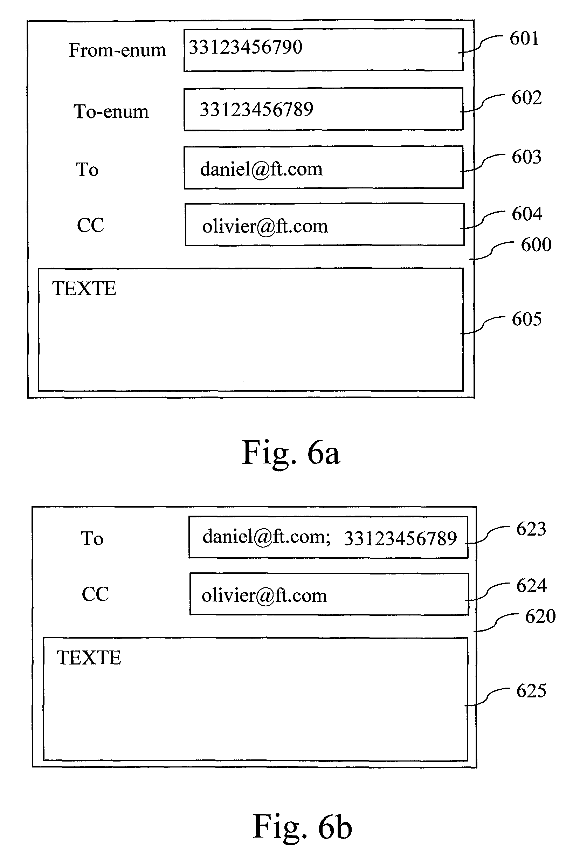

La **Fig. 6a** représente l'interface utilisateur du dispositif de communication d'un client lors de la composition d'un courrier électronique selon un premier mode de réalisation.

Selon ce premier mode de réalisation, le logiciel de messagerie du client 110 génère une interface graphique 600 permettant la composition d'un courrier électronique par le client 110. Dans cette interface graphique, des champs de composition de l'émetteur 601, de composition du ou des destinataires 602, 603 et 604 ainsi que de composition du texte 605 sont affichés. Selon ce mode de réalisation, les champs de composition du destinataire sont différenciés selon le cas ou le destinataire est identifié par son adresse électronique ou son numéro de téléphone international. Les champs notés 603 et 604 sont réservés à la composition d'adresses de courrier électronique. Le champ 602 est réservé à la composition de numéro de téléphone international. Ceci permet au logiciel de messagerie du client 110 d'effectuer rapidement la distinction entre les adresses de courrier électronique et les numéros de téléphone internationaux.

La **Fig. 6b** représente l'interface utilisateur du dispositif de communication d'un client lors de la composition d'un courrier électronique selon un second mode de réalisation.

Selon ce second mode de réalisation, le logiciel de messagerie du client 110 génère une interface graphique 620 permettant la composition d'un courrier électronique par le client 110. Dans cette interface graphique, trois champs sont proposés, un champ de composition 625 du texte du courrier électronique et deux champs de composition d'identifiants de destinataires sont présentés. Dans les champs de composition d'identifiants de destinataires "à destination, en copie", il n'est pas fait de distinction entre la composition d'une adresse électronique classique et la composition d'un numéro de téléphone international. Ceci permet au client 110 de ne pas avoir à effectuer une distinction entre ces identifiants, le logiciel de messagerie étant apte à effectuer la distinction comme cela a été précédemment décrit en référence à la Fig. 4.

Dans ce même mode de réalisation, le logiciel de messagerie du client 110 est apte à transférer un identifiant du client émetteur qui varie selon le cas ou tous les destinataires sont identifiés par leurs adresses de courrier électronique ou lorsqu'au moins un destinataire est identifié par son numéro de téléphone international. En effet, si un destinataire est identifié par son numéro de téléphone international, le logiciel de messagerie du client 110 transfère au serveur SMTP le numéro de téléphone international de l'émetteur ainsi que le serveur de messagerie ENUM auquel il est associé. Dans le cas contraire l'adresse de courrier électronique de l'émetteur est transférée.

Bien entendu, la présente invention n'est nullement limitée aux modes de réalisation décrits ici, mais englobe, bien au contraire, toute variante à la portée de l'homme du métier.

## Revendications

1. Procédé de transfert d'un courrier électronique à un destinataire (120) identifié par un numéro de téléphone international, le courrier électronique étant émis par un émetteur (110) associé à un serveur de messagerie ENUM (100) ayant un identifiant prédéterminé, le serveur de messagerie ENUM (100) étant apte à traiter des informations conformément au protocole ENUM, le destinataire (120) étant associé à un serveur de messagerie ENUM (140), le courrier électronique étant transféré par l'intermédiaire de serveurs de messagerie électronique (115, 125) et de serveurs de messagerie ENUM (100, 140), **caractérisé en ce que** lors du transfert du courrier électronique, le procédé comporte l'étape (E405) d'association, au numéro de téléphone international du destinataire (120) du courrier électronique, de l'identifiant du serveur de messagerie ENUM (100) auquel l'émetteur (110) du courrier électronique est associé.

2. Procédé selon la revendication 1, **caractérisé en ce que** le procédé est exécuté par un logiciel de messagerie électronique de l'émetteur du courrier électronique.

3. Procédé selon la revendication 2, **caractérisé en ce que** le procédé comporte l'étape (E403) de détermination d'au moins un destinataire identifié par un numéro de téléphone international.

4. Procédé de traitement, par un serveur de messagerie ENUM (100), d'un courrier électronique dont au moins un destinataire (120) est identifié par un numéro de téléphone international, un serveur de messagerie ENUM (100) étant apte à traiter des informations conformément au protocole ENUM, le courrier électronique ayant été émis par un émetteur (110) associé au serveur de messagerie ENUM (100), **caractérisé en ce que** le procédé comporte les étapes de:
- obtention de l'identifiant du serveur de messagerie ENUM (140) auquel le destinataire (120) du courrier électronique est associé,
- transfert du courrier électronique au serveur de messagerie ENUM (120) dont l'identifiant a été obtenu.

5. Procédé selon la revendication 4, **caractérisé en ce que** l'identifiant du serveur de messagerie ENUM (140) auquel le destinataire du courrier électronique est associé (120) est obtenu en interrogeant un serveur de nom de domaine (150) conforme au protocole ENUM et en obtenant le contenu d'un enregistrement prédéterminé du destinataire du courrier électronique.

6. Procédé selon la revendication 5, **caractérisé en ce que** le procédé comporte les étapes effectuées par le serveur de messagerie ENUM (140) auquel le destinataire du courrier électronique est associé de:
- réception (E508) du courrier électronique destiné à un destinataire lui étant associé,
- obtention (E509, E510) de consignes de transfert de courrier électronique associées au destinataire du courrier électronique,
- transfert (E511) du courrier électronique à destination du destinataire en fonction des consignes obtenues.

7. Dispositif de transfert d'un courrier électronique à un destinataire identifié par un numéro de téléphone international, le courrier électronique étant émis par un émetteur associé à un serveur de messagerie ENUM ayant un identifiant prédéterminé, un serveur de messagerie ENUM étant apte à traiter des informations conformément au protocole ENUM, le destinataire étant associé à un serveur de messagerie ENUM, le courrier électronique étant transféré par l'intermédiaire de serveurs de messagerie électronique et de serveurs de messagerie ENUM, **caractérisé en ce que** le dispositif de transfert du courrier électronique comporte des moyens d'association, au numéro de téléphone international du destinataire du courrier électronique, de l'identifiant du serveur de messagerie ENUM auquel l'émetteur du courrier électronique est associé.

8. Serveur de messagerie ENUM apte à traiter un courrier électronique dont au moins un destinataire est identifié par un numéro de téléphone international, le serveur de messagerie ENUM étant apte à traiter des informations conformément au protocole ENUM, le courrier électronique ayant été émis par un émetteur associé au serveur de messagerie ENUM, **caractérisé en ce que** le serveur de messagerie ENUM comporte :
- des moyens d'obtention de l'identifiant du serveur de messagerie ENUM auquel le destinataire du courrier électronique est associé,
- des moyens de transfert du courrier électronique au serveur de messagerie ENUM dont l'identifiant a été obtenu.

9. Serveur de messagerie ENUM selon la revendication 8, **caractérisé en ce que** le serveur de messagerie ENUM comporte :
- des moyens de réception de courrier électronique destiné à un destinataire lui étant associé,
- des moyens d'obtention de consignes de transfert de courrier électronique associées au destinataire du courrier électronique,
- des moyens de transfert du courrier électronique à destination du destinataire en fonction des consignes obtenues.

10. Programme d'ordinateur stocké sur un support d'informations, ledit programme comportant des instructions permettant de mettre en oeuvre le procédé selon l'une quelconque des revendications 1 à 3, lorsqu'il est chargé et exécuté par un système informatique.

11. Programme d'ordinateur stocké sur un support d'informations, ledit programme comportant des instructions permettant de mettre en oeuvre le procédé selon l'une quelconque des revendications 4 à 6, lorsqu'il est chargé et exécuté par un système informatique.
